Europäisches Patentamt

European Patent Office

Office européen des brevets

(19)

(11) **EP 1 203 830 B1**

(12) **EUROPEAN PATENT SPECIFICATION**

(45) Date of publication and mention
of the grant of the patent:
**29.12.2004 Bulletin 2004/53**

(51) Int Cl.[7]: **C22C 38/20**, F16D 65/12,
F16D 69/02

(21) Application number: **01126005.6**

(22) Date of filing: **31.10.2001**

(54) **Steel sheet for disk brake with improved anti-warp property and disk brake made thereof**

Stahlblech für eine Scheibenbremse mit verbesserter Verwerfungseigenschaften und eine
Scheibenbremse hergestellt aus dem Stahlblech

Toles laminées pour les poulie-freins sans gauchissement et un poulie-frein fabrique d'une tole
laminée

(84) Designated Contracting States:
**DE FR GB**

(30) Priority: **01.11.2000 JP 2000334133**

(43) Date of publication of application:
**08.05.2002 Bulletin 2002/19**

(73) Proprietor: **NISSHIN STEEL CO., LTD.**
**Chiyoda-ku Tokyo 100-8366 (JP)**

(72) Inventors:
  • **Hiramatsu, Naoto, c/o Stainless Steel Div.**
    **Shin-Nanyo-shi, Yamaguchi-ken 746-8666 (JP)**
  • **Tomimura, Kouki, c/o Stainless Steel Div.**
    **Shin-Nanyo-shi, Yamaguchi-ken 746-8666 (JP)**
  • **Kumano, Naohito, c/o Stainless Steel Div.**
    **Shin-Nanyo-shi, Yamaguchi-ken 746-8666 (JP)**

(74) Representative: **Wagner, Karl H., Dipl.-Ing. et al**
**WAGNER & GEYER**
**Patentanwälte**
**Gewürzmühlstrasse 5**
**80538 München (DE)**

(56) References cited:
**EP-A- 0 496 350**        **US-A- 4 564 392**
**US-A- 5 362 337**        **US-A- 5 979 614**

• **PATENT ABSTRACTS OF JAPAN vol. 009, no.
184 (C-294), 30 July 1985 (1985-07-30) & JP 60
052562 A (SUMITOMO KINZOKU KOGYO KK), 25
March 1985 (1985-03-25)**
• **PATENT ABSTRACTS OF JAPAN vol. 1996, no.
07, 31 July 1996 (1996-07-31) & JP 08 060309 A
(NISSHIN STEEL CO LTD), 5 March 1996
(1996-03-05)**

Note: Within nine months from the publication of the mention of the grant of the European patent, any person may give
notice to the European Patent Office of opposition to the European patent granted. Notice of opposition shall be filed in
a written reasoned statement. It shall not be deemed to have been filed until the opposition fee has been paid. (Art.
99(1) European Patent Convention).

**Description**

Field of the Invention:

This invention relates to martensitic stainless steel disk brakes with improved resistance to warp (anti-warp property).

Background Art:

Martensitic stainless steels such as SUS420J1 (C : approx. 0.16 - 0.25%) and SUS420J2 (C : approx. 0.26 - 0.40%) have been used for the disks used in the disk brakes of two-wheeled vehicles and the like. Steels of this type are transformed to substantially martensite single phase by quenching from the high-temperature austenite single phase region centered on 1,000 °C and then anneal to impart toughness.

Owing to their high C content, these steels cannot achieve a level of toughness sufficient to meet the requirements of disk brakes in the as-quenched condition. This makes it necessary to conduct two heat treatments, i.e., quenching and tempering. The high carbon content also requires the heat treatments to be carried out with utmost care because of the degradation of anticorrosion property caused by sensitization during quenching and the susceptibility to toughness degradation caused by the presence of large carbides

In response to these problems of high-carbon steels, JPA-10-152760 teaches a martensitic stainless steel for disk brakes having reduced C content. JPA-10-152760 eliminates the need for a tempering step after quenching by lowering the C content to 0.10% or less and, by enhancing the austenite balance, obtains an amount of martensite after quenching of a level sufficient to avoid strength degradation owing to the reduction of C content. By addition of Cu to the steel, it also improves resistance to softening by braking heat.

The steel of JPA-10-152760 overcomes various problems associated with high-carbon martensitic stainless steels and, as such, has helped to improve disk brake performance.

However, recent improvements in vehicle performance have further increased the load on disk brakes to the point that problems previously not given much attention have now become a major concern. Specifically, when a disk brake is repeatedly used over a long period under such a high load that the steel temperature reaches the neighborhood of 600 °C, warp arises in the disk of the disk brake. This is an especially critical problem in the case of large two-wheeled vehicles.

The object of the present invention is therefore to provide steel disk brakes of is a low-carbon martensitic stainless steel capable of inhibiting warp occurrence.

Further attention is drawn to the document EP-A-0 496 350, which discloses a substantially martensitic stainless steel as cast having good castability, ductility and capability of being hardened to a wide range of hardness, the steel consisting essentially of, in weight percent, up to about 0.08% carbon, about 1.0 to about 4.0% maganese, about 13.0 to about 17.0% chromium, about 1.5 to about 4.0% copper, up to about 0.12% nitrogen, less than about 1.0% silicon, less than about 1.0% molybdenum, less than 1.0% nickel, less than about 0.03% phosphorus, less than about 0.5% sulfur, up to about 0.005% boron, up to 0.5% niobium, vanadium, titanium and/or zirconium and balance essentially iron. The steels have particular utility in the production of cast golf clubs, forged golf clubs, cutlery, boat propellers and other cast, forged and wrought products, including free machining materials.

Attention is also drawn to the US-A-5 362 337, which discloses a martensitic stainless steel alloy having a good combination of machinability, hardness capability, and corrosion resistance. In particular, this alloy has a hardness capability of at least about 32 HRC and machinability in single-point turning, form-tool turning and drilling at a wide range of hardnesses including between about 96 HRB to 38 HRC.

Moreover attention is drawn to the US-A-5 979 614 which discloses a brake disc capable of being used in a quenched state, excellent in rusting resistance, toughness and resistance to softening resulting from heat generation caused by braking, and preferably useful as brake disc for a two-wheeled vehicle, which is produced from a martensitic stainless steel comprising 0.02 to 0.10% of C, up to 0.03% of N, up to 0.05% of Si, 0.5 to 1.5% of Mn, up to 0.5% of Ni, 10 to 15% of Cr, 0.5 to 2.5% of Cu, up to 0.1% of Al and the balance substantially Fe and unavoidable impurities provided that the amount of C+N is from 0.05 to 0.1% and p is at least 90, and a process for producing the same

Last but not least attention is drawn to the US-A-4 564 392, which discloses a heat resistant martensitic stainless steel having an improved creep rupture strength is described. This steel consists of, in weight percent, 0.05% to 0.12% carbon, not more than 0.5% silicon, not more than 1.5% manganese, not more than 1.5% nickel, 9.0 to 13.0% chromium, 0.5 to 2.0% molybdenum, 0.05 to 0.50% vanadium, not more than 0.15% nitrogen, and, if desired, at least one of 0.02 to 0.50% columbium, 0.02 to 0.5% tantalum, 0.5 to 2.0% tungsten, and 0.0003 to 0.0100% boron, with the balance being iron and incidental or inevitable impurities, and wherein the weight ratio of carbon to nitrogen (C/N) is not more than 3:1.

In accordance with the present invention a brake disk with improved anti-warp property obtained from a martensitic steel sheet, as set forth in claim 1, is provided.

Preferred embodiments of the invention are claimed in the dependent claims.

SUMMARY OF THE INVENTION

The inventors carried out an in-depth study on ways to impart a low-carbon martensitic stainless steel sheet with the ability to inhibit warp and, as a result, discovered the following facts:

(1) Addition of Cu to a low-carbon martensitic stainless steel effectively improves softening resistance in the vicinity of 600 °C but inhibition of warp is difficult by this alone.
(2) Resistance to warp is markedly improved when Mo and Nb are further added in combination with Cu.

The present invention was accomplished based on this knowledge.

Specifically, the object of this invention is achieved by the disc brake according to claim 1.

Each element symbol on the right side of the equation defining $\gamma$ max is replaced by a value representing the content of the element in mass percent. By "steel sheet for disk brake" is meant a steel sheet that enables a disk brake disk to be obtained by punching or other means and may be in the form of either steel strip or cut sheet.

The present invention also optionally provides a disk brake of the foregoing composition further comprising not more than 0.50% of Ti, not more than 0.2% of Al, not more than 0.015% of B, and/or one or more of not more than 0.2% of REM, not more than 0.2% of Y, not more than 0.1% of Ca and not more than 0.1% of Mg. These added elements may be selected in any desired combination.

These disk brakes provided by the present invention are particularly suitable for a two-wheeled vehicle.

The brake disk exhibits excellent anti-warp property of keeping disk periphery warp height within 0.3 mm when the disk is subjected to 500 cycles of repeated heating/cooling each consisting of [Temperature increase at a rate of 5 - 20 °C/sec up to 600 °C $\Rightarrow$ Maintaining at 600 °C during 10 sec $\Rightarrow$ Water cooling.]

Punching can be adopted as typical way of obtaining a brake disk from the steel sheet. By "quenched brake disk" is meant a brake disk not subjected to tempering or other heat treatment after quenching. The following procedure is used to determine the warp height of the disk periphery: the disk is placed on a horizontal plate having a flat surface used as a reference plane, the height of the peripheral portion of the disk from the reference plane is measured at a minimum of twelve locations regularly spaced over the entire peripheral portion, the value of the largest difference between the measured values and the initial-state height value (uniform thickness) of the peripheral portion designated by the brake disk design specifications is noted, the measurement is repeated for the other side of the disk by turning over it and the largest difference noted, and the larger of the two noted values is defined as the warp height. The measurement is made for both sides of the disk because disk warp is ordinarily toward one side over the entire disk periphery and accurate warp determination is impossible when this side face downward.

A brake disk product has a very high degree of flatness in its initial state (before use). The present invention provides a disk brake of such a high degree of flatness whose material is defined as being capable of keeping warp height within 0.3 mm when the disk is subjected to the aforesaid cold-hot thermal cycle test.

DESCRIPTION OF THE PREFERRED EMBODIMENTS

This invention provides a disk that is capable of ensuring maintenance of the initial flat shape of the disk stably over a long period even when the disk brake is repeatedly subjected to severe use. In other words, this invention provides a steel disk that exhibits improved anti-warp property. At the same time, however, it is necessary to achieve resistance to high-temperature softening, toughness, anticorrosion property and other performance capabilities that are equal to or better than those of conventional steels. It is also necessary to ensure compatibility with simplified processing that does not involve a tempering step after quenching. The features that define the present invention will now be explained. Unless otherwise stated, the symbol % designating the content of the different elements means mass percent.

C (carbon) is an austenite-forming element that is extremely effective for suppressing generation of $\delta$ ferrite at high temperature and strengthening the martensite phase generated when the steel cools during quenching. In addition, the precipitated carbides it generates when the temperature of the disk brake is elevated by braking heat contribute to preservation of high-temperature strength. Based on the result of their research, the inventors consider that these carbides work effectively to improve anti-warp property. Through various studies it was determined that a C content of not less than 0.05% is required to secure these effects sufficiently. However, this invention sets an upper limit of C content of 0.15% in order to secure adequate toughness by a process that omits tempering after quenching and to prevent carbide-induced degradation of corrosion resistance.

Si (silicon) is used for the purpose of deoxidization. As Si is a ferrite-forming element, however, excessive inclusion degrades hardness by causing generation of δ ferrite at high temperature. Si content is therefore limited to not more than 1.0%. More preferably, Si content is restricted to between an upper limit of 1.0% and a lower limit of 0.2%.

Mn (manganese) is an element that stabilizes austenite. It promotes generation of an austenite phase texture in the heating temperature region during quenching and thus promotes generation of martensite phase, which contributes to hardness. However, since excessive addition degrades high-temperature oxidation resistance and generates residual austenite phase, the upper limit of Mn content is set at 2.0%. More preferably, Mn content is restricted to between an upper limit of 1.5% and a lower limit of 0.2%.

Ni (nickel), like Mn, is also an element that stabilizes austenite and promotes generation of martensite phase that contributes to hardness. Owing to its high price and the fact that excessive inclusion of Ni causes generation of residual austenite phase, however, the upper limit of Ni content is set at 1.0%.

Cr (chromium) is an element that is required for its contribution to corrosion resistance. Cr content of not less than 9.0% is needed to ensure the corrosion resistance required of a disk brake. As Cr is a ferrite-forming element, however, excessive inclusion leads to generation of a large amount of δ phase, which in turn necessitates addition of austenite forming elements (C, N, Ni Mn, Cu etc.) in corresponding amounts for adjusting the amount of δ phase. Excessive addition of these austenite forming elements tends to increase the amount of residual austenite remaining after quenching, making it hard to achieve high strength. The upper limit of Cr content is therefore set at 15.0%

Cu (copper) is an element that stabilizes austenite. It promotes generation of an austenite phase texture in the heating temperature region during quenching and thus promotes generation of martensite phase, which contributes to hardness. When the temperature of the steel disk brake rises during use, moreover, Cu forms Cu-system precipitates that work to maintain high-temperature strength and effectively enhance anti-warp property. However, excessive inclusion of Cu degrades hot workability and becomes a cause of cracking. Based on various studies made in light of the disk brake use environment, therefore, the range of Cu content is defined as 0.5 - 4.0%.

Mo (molybdenum) is an element that effectively improves the corrosion resistance of a steel containing copper and, in this invention, is also very important for improving the anti-warp property of the brake disk. Specifically, it was found that in the use environment of a disk brake, Mo exhibits an effect of finely dispersing carbides and/or nitrides during disk temperature rise. It also exhibits an effect of inhibiting rapid strain release at high temperature. Based on the results of research, the inventors consider that these effects of Mo operate synergistically with the effects of Nb explained below to impart excellent anti-warp property to the brake disk. Excessive inclusion of Mo is unfavorable, however, since it promotes generation of □ferrite phase at high temperature. Through various studies it was therefore concluded that the Mo content of a steel disk brake intended for use under high load should best be in the range of 0.10 - 2.0%. A still more preferable lower limit of Mo content is 0.3%.

N (nitrogen) is an austenite forming element that is also highly effective for hardening martensite phase. As inclusion of a large amount of N causes formation of blow holes during casting, however, N content is limited to not more than 0.10%.

Nb (Niobium), together with Mo, is a highly important added element for improving brake disk anti-warp property. Specifically, it was discovered that in the use environment of a disk brake Nb forms precipitates that contribute to strength during disk temperature increase. It was also found that Nb exhibits an effect of inhibiting recovery in the martensite phase. From the results of research, the inventors consider that these effects not merely contribute to increased hardness but also markedly improve brake disk anti-warp property by operating synergistically with the aforesaid effects of Mo. A Nb content of not less that 0.05% is preferable for thoroughly realizing these effects. However, as addition of too much Nb raises high-temperature strength excessively and thus degrades hot workability, the upper limit of Nb content must be set at 1.0%. A still more preferable upper limit of Nb content is 0.8%.

Ti (titanium) forms precipitates at high temperature and is effective for enhancing hardness and improving anti-warp property, but is a cause of product surface flaws when added to excess. When Ti is added, therefore, its content range is preferably set at not more than 0.50%.

Al (aluminum) is an effective element for deoxidation during steelmaking and exhibits an effect of sharply reducing $A_2$-type inclusions that cause a problem during the punching of brake disks. When Al is added in excess of 0.2%, however, its positive effects saturate and, still worse, negative effects, such as increase in number of surface defects, appear. When Al is added, therefore, its content range is preferably set at not more than 0.2%.

B (boron) is an element that effectively suppresses edge cracking of the hot-rolled strip that occurs because of the difference in deformation resistance between □ferrite phase and austenite phase in the hot-rolling temperature region. However, excessive inclusion of B degrades rather than improves hot-rolling workability because it leads to formation of low melting point borides. When B is added, therefore, its content range is preferably set at not more than 0.015%.

REMs (rare earth metals/elements), Y (yttrium), Ca (calcium) and Mg (magnesium) are elements that effectively improve hot-workability. They also improve oxidation resistance. However, they offer no additional benefit when included beyond the point where these effects saturate. When these elements are added, therefore, the content range of REMs (La, Ce and Nd, for example) is set at a total of not more than 0.2%, the content range of Y at not more than 0.2%, the content range of Ca at not more than 0.1% and the content range of Mg at not more than 0.1%. These elements can be included singly or in combinations of two or more.

When any of Ti, Al, B, REM, Y, Ca and Mg are added, the combination of the added elements can be arbitrarily selected.

$\gamma$ max is a well-known index of austenite stability that corresponds to the maximum amount of austenite at high temperature. Through various studies, the inventors learned that the amount of martensite after quenching markedly affects brake disk strength and anti-warp property and further learned that in order to obtain excellent anti-warp property it is preferable to use a steel transformed to a substantially martensite single phase texture by quenching. In this invention, therefore, the lower limit of $\gamma$ max is set at 80 so as to obtain a substantially martensite single phase texture after quenching.

The steel sheet for disk brake of the present invention is made from a steel of the aforesaid chemical composition and is particularly adapted to thoroughly respond to the needs of a two-wheel disk brake whose disks are required to withstand heavy loads and maintain an attractive appearance for a long period.

The disk of a disk brake is ordinarily fabricated by subjecting a disk punched from an annealed steel sheet to required processing and then subjecting it to heat treatment such as quenching to impart high strength. The disk surface at the final stage of product manufacture is required to have high flatness. However, even though a brake disk made from a conventional steel may have high flatness in the initial state (before use), it will in most cases display some amount of warp in the course of extended use. In other words, brake disks have ordinarily experienced progressive flatness degradation. For example, a brake disk (having heat radiation holes, outer diameter: 260 mm, thickness: 4.4 mm, mass: 1 kg) removed from a two-wheeled vehicle that had been driven about 3000 km was found to have a disk periphery warp height as defined earlier in this specification of 0.8 mm. Warp of this degree is undesirable because it results in loss of brake performance with passage of time and leads to an unsightly appearance.

This invention responds to these problems by providing a disk brake of a steel of the chemical composition explained in the foregoing. This steel has latent properties that are manifested as excellent anti-warp property in a product disk. Notwithstanding, a brake disk exhibiting excellent anti-warp property may not be obtained even when the invention steel is used if heat treatment and processing are improperly conducted. From the viewpoint of quality control, therefore, it is desirable to establish a method for determining whether or not a manufactured brake disk will actually manifest excellent anti-warp property when put to use.

The inventors conducted an extensive study to determine the relationship between warping during actual use (flatness degradation over time) and accelerated laboratory testing. As a result, inventors learned that among quenched brake disks obtained from the steel sheet those that keep disk periphery warp height within 0.3 mm after the disk has been subjected to 500 cycles of repeated heating/cooling each consisting of [Temperature increase at a rate of 5 - 20 °C/sec up to 600 °C $\Rightarrow$ Maintaining at 600 °C during 10 sec $\Rightarrow$ Water cooling.] are capable of adequately inhibiting warp during actual use. The reliability of quality control can therefore be enhanced by, for example, taking a sample from each lot of product disks manufactured under the same production conditions from the same steel strip made from the same melt charge, subjecting it to the foregoing cold-hot thermal cycle test, and measuring the warp height of the disk periphery. If the warp height remains within 0.3 mm, it can be concluded that the disks of the lot concerned have excellent anti-warp property.

Working Example

Steels of the chemical compositions shown in Table 2 were produced in a vacuum melting furnace, forged, hot-rolled into steel strips of 4.4 mm thickness, and subjected to 780 °C x 10 hr batch annealing (cooling method: air cooling). Doughnut-shaped disks measuring 180 mm in outer diameter and 100 mm in inner diameter were then punched from the strips, subjected to [1,100 °C x 10 min retention solution treatment $\Rightarrow$ water cooling] quenching, and cut by machining surface to 4 mm thickness to obtain test disks. At this time, flatness (height difference throughout disk surface determined with reference to the horizontal surface of a horizontal plate on which the disk was placed) was adjusted to less than 0.1 mm.

Table 1

| Steel No.[1] | Alloy components and content (mass percent) | | | | | | | | | | γ max |
|---|---|---|---|---|---|---|---|---|---|---|---|
| | C | Si | Mn | Ni | Cr | Cu | Mo | N | Nb | Other | |
| 1 | 0.060 | 0.25 | 1.39 | 0.23 | 11.19 | 0.77 | 0.93 | 0.008 | 0.06 | | 97.0 |
| 2 | 0.087 | 0.77 | 0.72 | 0.87 | 13.45 | 2.34 | 0.45 | 0.056 | 0.43 | Ti:0.25 | 127.5 |
| 3 | 0.100 | 0.29 | 1.45 | 0.24 | 12.34 | 1.23 | 1.34 | 0.042 | 0.25 | Al:0.08 | 115.3 |
| 4 | 0.129 | 0.55 | 0.25 | 0.78 | 14.23 | 3.34 | 1.76 | 0.014 | 0.67 | | 106.1 |
| 5 | 0.123 | 0.56 | 0.47 | 0.65 | 9.23 | 1.34 | 0.97 | 0.037 | 0.23 | Mg:0.02 REM: 0.045 | 163.3 |
| 6 | 0.098 | 0.23 | 0.26 | 0.02 | 11.34 | 0.76 | 0.32 | 0.084 | 0.18 | Ca:0.012 Y:0.012 | 141.2 |
| 7 | 0.251[2] | 0.42 | 0.32 | 0.92 | 12.45 | 1.23 | 1.45 | 0.032 | 0.12 | | 178.1 |
| 8 | 0.122 | 0.24 | 1.85 | 0.03 | 11.45 | 0.23[2] | 0.87 | 0.054 | 0.23 | Mg:0.02 | 135.7 |
| 9 | 0.075 | 0.34 | 0.74 | 0.43 | 14.34 | 0.78 | 0.94 | 0.008 | 0.45 | Ti:0.07 Al:0.12 | 64.7[2] |
| 10 | 0.023[2] | 0.45 | 1.56 | 0.78 | 10.34 | 0.58 | 1.22 | 0.032 | 0.33 | Ca:0.007 | 107.9 |
| 11 | 0.047 | 0.28 | 0.89 | 0.43 | 13.56 | 1.56 | 0.08[2] | 0.024 | 0.02[2] | | 90.0 |
| 12 | 0.088 | 0.35 | 1.24 | 0.35 | 12.78 | 2.34 | 0.05[2] | 0.018 | 0.04[2] | | 120.5 |

[1] Steel Nos. 1 - 6: Invention steels
Steels Nos. 7 - 12: Comparative steels

[2] Outside range prescribed by invention

A cold-hot thermal cycle test imparting 500 cycles of repeated heating/cooling each consisting of [Temperature increase at a rate of 10 °C/sec up to 600 °C ⇒ Maintaining at 600 °C during 10 sec ⇒ Water cooling.] was carried out on each test disk. Heating was conducted by the high-frequency induction method and the temperature increase rate and maintaining temperature were controlled while measuring the specimen temperature with a thermocouple attached to the test disk surface.

After the cold-hot thermal cycle test, each disk was measured for warp height as defined earlier. The disks were also examined for presence of carbide-induced rusting and their surface hardness was measured. The results are shown in Table 2.

Table 2

| Steel No.[1) | Surface hardness (HV20) | Presence of carbide-induced rust | Warp height at disk periphery (mm) |
|---|---|---|---|
| 1 | 280 | No | <0.1 |
| 2 | 321 | No | <0.1 |
| 3 | 343 | No | <0.1 |
| 4 | 375 | No | <0.1 |
| 5 | 363 | No | <0.1 |
| 6 | 306 | No | <0.1 |
| 7 | 395 | Yes | <0.1 |
| 8 | 358 | No | 0.6 |

[1)] Steel Nos. 1 - 6: Invention steels
Steel Nos. 7 - 12: Comparative steels

Table 2   (continued)

| Steel No.[1] | Surface hardness (HV20) | Presence of carbide-induced rust | Warp height at disk periphery (mm) |
|---|---|---|---|
| 9 | 225 | No | 0.7 |
| 10 | 241 | No | 0.9 |
| 11 | 238 | No | 0.7 |
| 12 | 298 | No | 0.8 |

[1] Steel Nos. 1 - 6: Invention steels
Steel Nos. 7 - 12: Comparative steels

The invention examples using steel sheets having chemical compositions falling within the ranges prescribed in the foregoing (Nos. 1 - 7) all had disk periphery warp heights after the cold-hot thermal cycle test of less than 0.1 mm, i.e., exhibited excellent test results of a level at which substantially no warp could be observed. The disks were free of carbide-induced rusting, maintained a surface hardness after cold-hot thermal cycle testing of not less than HV280, and were confirmed to exhibit corrosion resistance and strength properties sufficient for use in a disk brake.

In contrast, the comparative example using the high C content steel No. 7 exhibited a high level of strength but experienced carbide-induced rusting. This is thought to be due to sensitization by heating during quenching. The comparative examples using steel No 8, which was low in Cu content, steel No. 9, which had a low γ max, and steel No. 10, which was too low in C content, all experienced marked warp exceeding 0.3 mm. The comparative examples using steels Nos. 11 and 12, which contained Cu but did not include prescribed amounts of Mo and Nb, also exhibited conspicuous warp greater than 0.3 mm. These comparative examples thus failed to overcome the problems encountered by conventional steels. From this it can be concluded that combined addition of Cu, Mo and Nb is highly effective for overcoming the warp problem of brake disks.

This invention provides a solution to the problem of brake disk "warp" that has emerged as a new concern owing to the greater loads being placed on disk brakes as vehicles rise to higher performance levels. The technology introduced by this invention also makes it possible to achieve the corrosion resistance and high-strength properties required of a steel for disk brake and to eliminate the need for tempering after quenching to thereby establish a process with fewer steps. In addition, the invention facilitates product quality control by offering a method for identifying product disks that are capable of inhibiting warp in future use. The invention can therefore be expected to contribute to the realization of high performance vehicle disk brakes from the aspect of the material used in the disks.

**Claims**

1.   A brake disk with improved anti-warp property obtained from a martensitic steel sheet having a chemical composition comprising, in mass percent, 0.05 - 0.15% of C, not more than 1.0% of Si, not more than 2.0% of Mn, not more than 1.0% of Ni, 9.0 - 15.0% of Cr, 0.5 - 4.0% of Cu, 0.10 - 2.0% of Mo, not more than 0.10% of N, 0.05 - 1.0% of Nb, and the balance of Fe and unavoidable impurities and having a γ max value defined by:

$$\gamma \text{ max} = 420C + 470N + 23Ni + 7Mn + 9Cu - 11.5Cr - 11.5Si - 12Mo - 3.5Nb + 189$$

of not smaller than 80 wherein said chemical composition further comprises optionally not more than 0.50% of Ti, optionally not more than 0.2% of Al, optionally not more than 0.015% of B, and/or optionally one or more of not more than 0.2% of REM, not more than 0.2% of Y, not more than 0.1% of Ca and not more than 0.1% of Mg.

2.   The brake disk according to claim 1, wherein said brake disk is for a two-wheeled vehicle.

3.   The brake disk of claim 1 or 2, wherein the brake disk is a quenched brake disk and wherein the brake disk exhibits excellent anti-warp property of keeping disk periphery warp height within 0.3 mm when the disk is subjected to 500 cycles of repeated heating/cooling each consisting of a temperature increase at a rate of 5 - 20 °C/sec up to 600 °C followed by maintaining at 600 °C during 10 sec followed by water cooling].

**Patentansprüche**

1.  Scheibenbremse mit verbesserter Anti-Verwerfungseigenschaft, die aus einem martensitischen Stahlblech hergestellt wurde, welches eine chemische Zusammensetzung besitzt, die in Massenprozent folgendes aufweist: 0,05-0,15% C, nicht mehr als 1,0% Si, nicht mehr als 2,0% Mn, nicht mehr als 1,0% Ni, 9,0-15,0% Cr, 0,5-4,0% Cu, 0,1-2,0% Mo, nicht mehr als 0,10% N, 0,05-1,0% Nb und der Rest Fe und unvermeidliche Verunreinigungen, und welches einen γ-max-Wert besitzt, der definiert wird durch:

    $$\gamma\,max = 420C + 470N + 23Ni + 7Mn + 9Cu - 11,5Cr - 11,5Si - 12Mo - 3,5Nb + 189,$$

    und nicht weniger als 80 beträgt, wobei die chemische Zusammensetzung weiter folgendes aufweist:

    optional nicht mehr als 0,50% Ti,
    optional nicht mehr als 0,2% Al,
    optional nicht mehr als 0,015% B und/oder
    optional eine oder mehrere Zugaben von nicht mehr als 0,2%
    seltenen Erden, von nicht mehr als 0,2% Y, von nicht mehr als 0,1 %
    Ca und nicht mehr als 0, 1 % Mg.

2.  Bremsscheibe nach Anspruch 1, wobei die Bremsscheibe für ein zweirädriges Fahrzeug ist.

3.  Bremsscheibe nach Anspruch 1 oder 2, wobei die Bremsscheibe eine abgeschreckte Bremsscheibe ist, und wobei die Bremsscheibe eine hervorragende Anti-Verwerfungseigenschaft zeigt, wobei sie eine Verwerfungshöhe von innerhalb 0,3 mm am Scheibenumfang beibehält, wenn die Scheibe 500 Zyklen einer wiederholten Aufheizung/ Abkühlung unterworfen wird, die jeweils aus einer Temperatursteigerung mit einer Rate von 5-20° C/s auf 600° C besteht, gefolgt durch Halten bei 600° C während 10 Sekunden gefolgt durch eine Wasserabkühlung.

**Revendications**

1.  Disque de freinage à propriétés anti-gauchissement améliorées obtenu à partir d'une tôle d'acier martensitique ayant une composition chimique comprenant, en pourcent en poids, 0,05 à 0,15 % de C, pas plus de 1,0 % de Si, pas plus de 2,0 % de Mn, pas plus de 1,0 % de Ni, 9,0 à 15,0 % de Cr, 0,5 à 4,0 % de Cu, 0,10 à 2,0 % de Mo, pas plus de 0,10 % de N, 0,05 à 1,0 % de Nb, et le reste en fer et impuretés inévitables et ayant une valeur γmax définie par :

    $$\gamma max = 420C + 470N + 23Ni + 7Mn + 9Cu - 11,5Cr - 11,5Si - 12Mo - 3,5Nb + 189$$

    non inférieure à 80, la composition comprenant en outre :

    optionnellement pas plus de 0,50 % de Ti,
    optionnellement pas plus de 0,2 % de Al,
    optionnellement pas plus de 0,015 % de B, et/ou
    optionnellement un ou plusieurs de pas plus de 0,2 % de
    REM, pas plus de 0,2 % de Y, pas plus de 0,1 % de Ca et pas plus de 0,1 % de Mg.

2.  Disque de freinage selon la revendication 1, dans lequel le disque de freinage est destiné à un véhicule à deux roues.

3.  Disque de freinage selon la revendication 1 ou 2, dans lequel le disque de freinage est un disque de freinage trempé et dans lequel le disque de freinage présente d'excellentes propriétés anti-gauchissement de maintien de la hauteur de gauchissement de la périphérie du disque à moins de 0,3 mm quand le disque est soumis à 500 cycles de chauffage/refroidissement répétés, consistant chacun en une augmentation de température à une vitesse de 5 à 20°C/s jusqu'à 600°C suivie d'un maintien à 600°C pendant 10 s, suivi d'un refroidissement à l'eau.